Europäisches Patentamt

European Patent Office

Office européen des brevets

(11) Publication number: **0 043 103**

**B1**

(12) **EUROPEAN PATENT SPECIFICATION**

(45) Date of publication of patent specification: **18.09.85**

(21) Application number: **81104904.8**

(22) Date of filing: **25.06.81**

(51) Int. Cl.⁴: **C 23 C 30/00**

(54) Hard facing of metal substrates using VC-Cr3C2.

(30) Priority: **26.06.80 US 163142**

(43) Date of publication of application:
**06.01.82 Bulletin 82/01**

(45) Publication of the grant of the patent:
**18.09.85 Bulletin 85/38**

(84) Designated Contracting States:
**DE GB IT SE**

(56) References cited:
**AT-B- 348 777**
**DD-A- 99 118**
**US-A-3 832 221**
**US-A-4 099 993**

(73) Proprietor: **UNION CARBIDE CORPORATION**
**Old Ridgebury Road**
**Danbury Connecticut 06817 (US)**

(72) Inventor: **Brown, Harry James**
**770 Fairchild Place**
**Lewiston, N.Y. (US)**

(74) Representative: **Schwan, Gerhard, Dipl.-Ing.**
**Elfenstrasse 32**
**D-8000 München 83 (DE)**

Courier Press, Leamington Spa, England.

## Description

The present invention relates to a method for hard facing a surface of an iron base alloy substrate and a hard facing rod.

Hard facing is a well known procedure which consists essentially of applying to a base metal substrate, e.g. an iron base alloy substrate, a deposit of a metal which is substantially harder than the base metal. This procedure has been employed in many applications to improve the hardness and wear or abrasion resistance of the base metal. For example, a hard facing layer may be applied by this procedure to the surface of various machine wear parts such as cutting tools, hammers and the like and to the teeth of earth moving and digging equipment.

Heretofore, the hard facing materials used in this procedure have been chosen mostly from a group of metal carbides and mixtures of metal carbides, for example, carbides of tungsten, titanium, tantalum, chromium, vanadium and zirconium to mention a few. These hard facing materials have proven satisfactory in most applications for imparting improved wear and impact resistance to the metal substrates.

In recent years, tungsten carbide has been the most commonly used hard facing material because of its excellent hardness and wear characteristics. However, tungsten carbide is an expensive hard facing material and does possess certain limitations. For instance, due to the high density of tungsten carbide, a relatively large weight of the material is required in order to achieve adequate hard facing of the metal substrate.

In an effort to overcome these limitations, it has been proposed to employ mixtures of tungsten carbide with other metal carbides such as vanadium carbide and chromium carbide as the hard facing material. Until recently, these hard facing materials have been prepared by mechanically mixing together finely-divided particles of the metal carbides with or without a suitable binder.

US—A—4 055 742 discloses an improved method for hard facing a metal substrate wherein a finely-divided particulate composition of chemically combined vanadium and carbon having tungsten in solid solution is deposited onto the surface of the substrate. A particular advantage of this improved method is that the VC—WC solid solution material does not tend to migrate in the molten metal matrix but rather is substantially uniformly distributed therein with the result that the solidified deposit exhibits excellent hardness and wear resistant properties. In an other embodiment of US—A—4 055 742 the hard facing material contains up to 90% by weight chromium carbides.

US—A—4 162 392 discloses another improved method for hard facing a metal substrate using a finely-divided particulate composition of chemically combined vanadium, tungsten and carbon in weight proportions of 0.75VC—0.25WC, together with from about 5 to about 40% by weight of chromium carbide. The chromium carbide may be present in the composition as a free carbide or may be partially or totally combined chemically with the VC—WC solid solution. This hard facing material is also able to produce a deposit having excellent wear resistant properties at least comparable to those provided by the use of tungsten carbide alone but at a substantially reduced cost owing to the relatively large amounts of the less expensive chromium carbides that are employed.

It would be highly desirable to employ even larger quantities of chromium carbide in the particulate composition except for the fact that when this hard facing material is applied to a metal substrate using conventional electric welding techniques, the abrasive wear resistance of the resulting deposit falls abruptly with increased amounts of chromium carbide above about 40% by weight of the particulate composition. The exact reason for this sudden change in wear resistance is not clearly understood, it being noted at the same time that hard faced surfaces deposited by conventional gas welding techniques using the same particulate composition having a high content of chromium carbide exhibit an excellent wear resistance comparable to deposits made using tungsten carbide alone.

It is therefore an important object of the present invention to provide an improved hard facing method using a material containing vanadium and chromium carbide in solid solution to produce a hard faced surface having excellent hardness and wear resistance properties.

A more specific object of the present invention is to provide an improved hard facing method using a material containing vanadium and chromium carbide in solid solution to produce a hard faced surface by conventional gas or electric welding techniques having excellent hardness and wear resistant properties even in those instances where the hard facing material contains predominantly chromium carbide.

The foregoing and other objects and advantages of the present invention are achieved by a novel and improved method of hard facing a metal substrate e.g. an iron base low alloy substrate, which comprises depositing onto the surface of the metal substrate using conventional gas or electric welding techniques, a solid hard facing material consisting of chemically combined vanadium, chromium and carbon in weight proportions of between about 80 to 20% VC and 20 to 80% $Cr_3C_2$ alone or together with up to about 15% by weight in the aggregate of at least one member of the group of cobalt, iron, nickel and molybdenum.

In an important aspect of the present invention, a hard facing surface is applied to a metal substrate, e.g. an iron base low alloy substrate, using conventional electric welding techniques and a hard facing material containing both vanadium and chromium carbide in solid solution wherein the amount of chromium carbide is in excess of about 50% by weight of the total hard facing material.

2

The vanadium carbide that is present in the hard facing composition mentioned above is shown as VC whereas actually, the carbon is maintained at a level such that the resulting carbide is $VC_{.89}$ or slightly higher to allow for some decarburization.

The present invention will now be described in greater detail with particular reference to the photomicrographs in the accompanying drawing which show electron microprobe analyses of weld deposits prepared using a hard facing material containing vanadium and chromium carbide in solid solution and wherein;

Figures 1(a)—(f) represent an electron microprobe analysis taken at 400× magnification of a weld deposit made by conventional electric welding techniques using a hard facing material containing 96 (80$VC_{.89}$ 20 $Cr_3C_2$) 2Ni—2Mo;

Figures 2(a)—(f) represent an electron microprobe analysis taken at 400× magnification of a weld deposit made in a similar manner but with a hard facing material containing 96(25$VC_{.89}$ 75 $Cr_3C_2$) 2Ni—2Mo;

Figures 3(a)—(d) represent an electron microprobe analysis taken at 800× magnification of a weld deposit made in a similar manner but using a hard facing material containing 75$VC_{.9}$ 25 $Cr_3C_2$;

Figures 4(a)—(d) represent an electron microprobe analysis taken at 800× magnification of a weld deposit made in a similar manner but using a hard facing material containing 25$VC_{.9}$ 75 $Cr_3C_2$;

Figures 5(a)—(d) represent an electron microprobe analysis taken at 800× magnification of a weld deposit made in a similar manner but using a hard facing material containing 50$VC_{.9}$ 50 $Cr_3C_2$.

The hard facing material used in the practice of the present invention can be prepared by various techniques well known in the art. For example, the hard facing material can be made by blending together finely-divided particles of the raw materials, e.g. vanadium, chromium, carbon, nickel and molybdenum, in the appropriate stoichiometric quantities, cold pressing the blended particulate mixture into the form of small pellets and then crushing the pellets into granules. The granules are then sintered in a vacuum or inert atmosphere at high temperatures, e.g. about 1400°C, for a time sufficient to sinter or fuse the granules together. Alternatively, the hard facing material may be prepared by melting the blended particulate mixture in a high temperature electric arc furnace and then crushing the solidified product to form a finely-divided granular hard facing material.

A particular embodiment of the present invention comprises a hard facing rod in conventional form for use in hard facing iron and iron base low alloy metal substrates. Such a hard facing rod comprises a metallic sheath or tube formed of the usual metals for such purposes such as iron or steel containing therein a hard facing composition as previously described.

The hard facing method in accordance with the present invention can be used with known gas and electric welding techniques, e.g. gas welding, arc welding and other practices described in the "Master Chart of Welding Processes"—American Welding Society (1969), using suitable fluxes such as silica manganese or borax, for example.

The hard facing method of the present invention can also be used with known plasma flame spray or coating techniques.

A particular advantageous embodiment of the present invention are those hard facing practices which involve the forming of a puddle of molten iron base alloy, e.g. steel on a substrate, and the dropping of the particles, e.g. granules of hard facing material into the puddle, e.g. sized about 0.18 to 1.68 mm (12 to 80 mesh) to provide, upon solidification of the puddle, a hard facing deposit comprising a steel matrix with particles of the hard facing material of the present invention uniformly distributed and bonded therein. Examples of such practices are "bulk" TIG (tungsten inert gas) and MIG (metal inert gas) techniques wherein the hard facing material is dropped into a smaller metal puddle.

In the hard facing of metal substrates in accordance with the present invention by the above noted conventional techniques, the metal substrate and the applied hard facing material become metallurgically bonded.

The resulting hard facing deposit is a matrix of iron or iron base low alloy metal in which particles of the hard facing material of the present invention are embedded by metallurgical bonding.

When deposited onto a high alloy substrate such as Hadfield steel, the hard facing material of the present invention provides a surface deposit which is less wear resistant than in the case of low alloy steels. However, it has been found that the wear resistance can be improved by work hardening the surface.

The following examples will serve to illustrate the practice of the present invention.

Example I

The following materials were used to obtain a cold pressed, sintered hard facing composition containing 96% by weight of (80% $VC_{.9}$ 20% $Cr_3C_2$) 2% Ni and 2% Mo for use in the present invention;

(a) 487.1 grams of a commercially available material (Union Carbide Corporation) containing mixed $V_2C+VC$, sized 0.21 mm (65 mesh) and finer having the following analysis;

84.55% V
13.62% C
1.1% O

balance moisture and incidental impurities.

(b) 42.2 grams Acheson* brand G 39 graphite powder, size 0.074 mm (200 mesh) and finer.

(c) 13.0 grams nickel powder, grade 123 from Alcan Metals.

(d) 13.0 grams molybdenum metal powder (4 micron) from Amax.

(e) 108.7 grams of chromium metal size 0.21 mm (65 mesh) and finer. The chromium had the following analysis;

$$99.48\% \ Cr$$
$$0.52\% \ O$$

The powders were placed in a 1.9 l ball mill with 4550 grams of 12.7 mm diameter balls and turned at 110 RPM for 88 hours. After 88 hours of milling, the material was pressed into pellets in a 50.8 mm diameter die at a 45 t load. The pellets were crushed into granules. The granules were placed in graphite boats and inserted in a vacuum at 1400°C for two hours. The granules were lightly bonded together but were easily separated in a jaw crusher. Aside from the contained Ni the material was formed of chemically combined vanadium, chromium, molybdenum and carbon. The material had the following analysis by weight:

$$V=62.21\%$$
$$Cr=16.22\%$$
$$Fe=1.0\%$$
$$Ni=2.00\%$$
$$Mo=1.99\%$$
$$C=15.09\%$$
$$O=0.25\%$$
$$N=0.46\%.$$

The cold pressed and sintered material prepared as described above was employed as a hard facing material. Additional grain was also prepared by varying the amounts of $Cr_3C_2$ and processed in the following manner.

For electric welding deposits, 0.59×1.68 mm (12×30 mesh) granules were packed into 305 mm long 6.35 mm OD, 4.83 mm ID mild steel tubing. The granules comprise about 45% by weight of the rod. The rod was fluxed for electric deposition and deposited on an iron substrate at 180 amp D.C.R.P. For gas welding deposits, 0.18×0.59 mm (30×80 mesh) granules were similarly packed into mild steel tubing and fluxed for oxyacetylene welding and deposited by oxyacetylene techniques with a minimum of penetration on a mild steel substrate with a carburizing flame.

The resulting hard faced surfaces were tested for abrasion resistance using a rubber wheel-sand wear and abrasion test. The wear and abrasion test was as follows:

A 25.4 mm×76.6 mm×12.7 mm thick plain low carbon steel substrate was hard surfaced by depositing a hard facing material thereon and the hard faced surface was ground flat. A 232 mm OD by 12.7 mm wide neoprene circular disk (durometry hardness Shore A 50—60) was used with the hard faced surface being loaded with 52 J against the neoprene disk. Silica sand (sand blast sand size 2, QROK) was fed in excess between the neoprene disk and the hard faced surface with the neoprene disk being turned at 200 RPM for 200 revolutions. The specimen under test was weighed before and after and the procedure was repeated until a constant weight loss was obtained for repeated tests and this weight loss was used as a measure of wear and abrasion resistance. The results obtained in these tests are shown in Table I.

TABLE I

| Weld sample | Composition of grain | Deposit | Rockwell A. hardness of weld | Abrasion wear test weight loss (grams) |
|:---:|:---|:---|:---:|:---:|
| A | 96(80VC 20 $Cr_3C_2$)2Ni2Mo | Gas | 87.7 | .022 |
| B | 96(80VC 20 $Cr_3C_2$)2Ni2Mo | Electric | 84.3 | .030 |
| C | 96(25VC 75 $Cr_3C_2$)2Ni2Mo | Gas | 84.9 | .017 |
| D | 96(25VC 75 $Cr_3C_2$)2Ni2Mo | Electric | 82.9 | .018 |

It will be seen from Table I that the hard facing material of the present invention provides a hard faced surface having excellent hardness and wear resistant properties. Moreover, it can be seen that the hardness and wear resistance of the resulting deposits are substantially the same over the entire range of chromium carbide additions, i.e. 20—80% $Cr_3C_2$, using both gas and electric welding techniques. In the particular case of Weld Sample D, for example, prepared using a hard facing composition containing predominantly chromium carbide (no tungsten) the wear resistance of the deposit is as good as that made with the same material using gas welding techniques. The hardness values of all the weld deposits tested

---

*Trademarks of Union Carbide are also substantially the same with only a slight reduction in hardness for those deposits prepared using the higher weight proportions of chromium carbide.

Electron microprobe analysis of the hard facing deposits prepared in the above example were also obtained. These analyses consist basicly of two types of images, i.e. electron and X-ray. The electron image maps the electron emissive property of the specimen under beam excitation, the video signals generated being used to produce micrographs which are geometrically similar to optical micrographs. However, an advantage of the present analysis is that the contrasted areas on the micrographs are related to compositional changes in the sample.

The X-ray image scan is the distribution of a single element displayed on a micrograph. The image is composed of a large number of spots, the mapping of these spots indicates the concentration of a specific element in the scanned area.

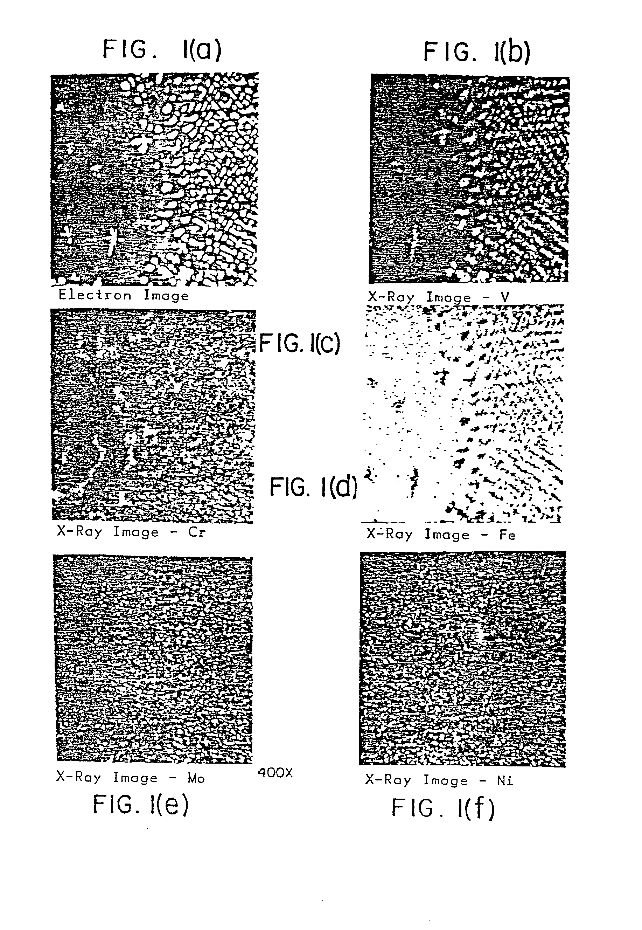

Figure 1(a) shows the electron image at 400× magnification of a weld deposit prepared by electric welding using a hard facing composition comprising 96% (80VC$_{.89}$ 20 Cr$_3$C$_2$) 2% Ni—2% Mo. This deposit is Weld Sample B in Table I. In Figures 1(b)—(f) there are shown the corresponding X-ray images for V, Cr, Fe, Mo and Ni, respectively. It will be seen from this analysis that the chromium tends to homogeneously disperse throughout the deposit and combines with iron to form iron carbides. The vanadium on the other hand shows no preference at all to combine with the iron from the base metal. The nickel and molybdenum both tend to homogeneously disperse throughout the weld deposit.

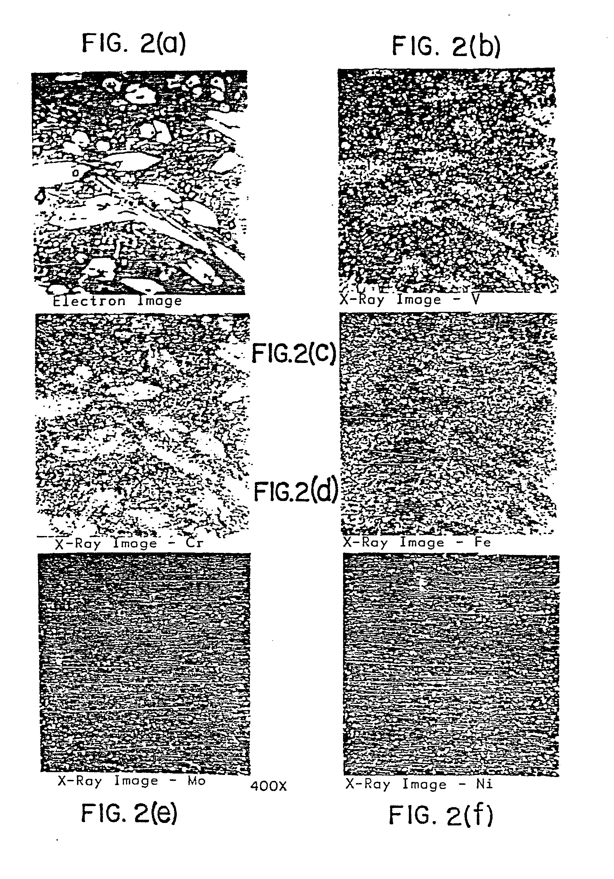

Figure 2(a) shows the electron image at 400× magnification of the weld deposit prepared by electric welding using a hard facing composition comprising 96% (25VC$_{.89}$ 75 Cr$_3$C$_2$) 2% Ni—2% Mo. This deposit is Weld Sample D in Table I. Again, in Figures 2(b)—(f), there are shown the corresponding X-ray images for V, Cr, Fe, Mo and Ni, respectively. However, it will be seen from this analysis that the major proportion of the chromium tends to combine instead with the vanadium in solid solution to form precipitates of VCr carbide. The nickel and molybdenum tend to disperse uniformly throughout the weld deposit.

It is significant to note that while the hardness and wear resistant properties of the hard facing deposits to not change substantially with increased weight proportions of chromium carbide in the hard facing material, a transition in the microstructure of the deposit does apparently take place. Thus, as seen in Figures 1(a)—(f), for low proportions of Cr$_3$C$_2$, the chromium combines with iron to form relatively soft iron carbides. The excellent hardness and wear properties of these deposits is apparently due to the relatively large amount of vanadium carbide that is present in the deposit. On the other hand, as seen in Figures 2(a)—(f), for high proportions of Cr$_3$C$_2$, the chromium now combines with the less abundant vanadium in the hard facing composition to form hard vanadium chromium carbides in solid solution rather than the relatively soft iron carbides. The net result is that when this transition in the microstructure of the deposit take place, the tendency for the chromium to form VCrC apparently compensates for the depletion of vanadium carbide in the hard facing material and surprisingly, the hardness and wear properties of the resulting deposit remain substantially unchanged.

It will be apparent then that the hard facing of iron base alloy substrates can now be accomplished by the method in accordance with the present invention with substantially equal results using a hard facing composition containing predominantly vanadium carbide or chromium carbide or substantially equal proportions of both. Obviously, from the standpoint of manufacturing cost, it is preferred to employ a hard facing composition containing mostly Cr$_3$C$_2$ which is less expensive.

Example II

A melted hard facing composition containing by weight 75VC$_{.9}$ 25 Cr$_3$C$_2$ was prepared from the following materials:

(a) 27.02 grams of a commercially available material (Union Carbide Corporation), containing mixed V$_2$C+VC sized 3.1 mm (6.5 mesh) and finer having the following analysis
    85.90% V
    13.01% C
    0.068% O
(b) 2.99 grams Acheson* brand G-39 graphite powder size 0.074 mm (200 mesh) and finer;
(c) 8.12 grams of electrolytic chromium metal sized 0.149 mm (100 mesh) and finer.

The powders were blended together by tumbling and then pressed into a 19 mm diameter pellet.

The pellet was placed in a nonconsumable arc melting furnace on a water cooled copper hearth. The chamber was evacuated and the pellet was arc melted using a tungsten electrode at a current of 175 amps. The pellet was then crushed and sized to both 0.59×1.68 mm (12×30 mesh) and 0.18×0.59 mm (30×80 mesh).

The melted grain prepared in the foregoing manner and using various amounts of Cr$_3$C$_2$ was employed as a hard facing material as follows:

For electric welding deposits, 0.59×1.68 mm (12×30 mesh) granules were packed into 305 mm long 6.35 mm O.D., 4.83 mm I.D. mild steel tubing. The granules comprised about 45% by weight of the rod. The

*Trademark of Union Carbide Corporation rod was fluxed for electric deposition and deposited on an iron substrate at 180 amp D.C.R.P.. For gas welding deposits, 0.18×0.59 mm (30×80 mesh) granules were similarly packed into mild steel tubing and fluxed for oxyacetylene welding and deposited by oxyacetylene techniques with a minimum of penetration on a mild steel substrate with a carburizing flame.

The resulting hard faced surfaces were tested for hardness and wear and abrasion resistance. The test procedures used were identical to those that were employed in Example I above. The results of the test are given in Table II below.

TABLE II

| Weld sample | Composition of grain | V Source | Deposit | Rockwell A hardness of weld | Abrasion wear test weight loss (grams) |
|---|---|---|---|---|---|
| E | 75VC 25 $Cr_3C_2$ | ($V_2C$+VC) | Gas | 82.0 | .033 |
| F | 75VC 25 $Cr_3C_2$ | ($V_2C$+VC) | Electric | 82.5 | .015 |
| G | 50VC 50 $Cr_3C_2$ | FeV | Gas | 84.5 | .025 |
| H | 50VC 50 $Cr_3C_2$ | FeV | Electric | 82.7 | .032 |
| I | 50VC 50 $Cr_3C_2$ | ($V_2C$+VC) | Gas | 82.8 | .018 |
| J | 50VC 50 $Cr_3C_2$ | ($V_2C$+VC) | Electric | 84.8 | .008 |
| K | 25VC 75 $Cr_3C_2$ | ($V_2C$+VC) | Gas | 79.8 | .014 |
| L | 25VC 75 $Cr_3C_2$ | ($V_2C$+VC) | Electric | 82.6 | .012 |

It will be seen from Table II that the melted hard facing granular composition prepared in this example also provides a hard faced surface having excellent hardness and wear properties. Again, the hardness and wear resistance of the deposits are substantially the same over the entire range of chromium carbide additions, i.e. 20 to 80% $Cr_3C_2$, using both gas and electric welding techniques. As can be seen particularly in Weld samples I—L inclusive, the wear resistance of the deposits seems to improve slightly with the higher weight proportions of chromium carbide although the hardness remains substantially the same. The hardness values also increase when FeV is used as the vanadium source.

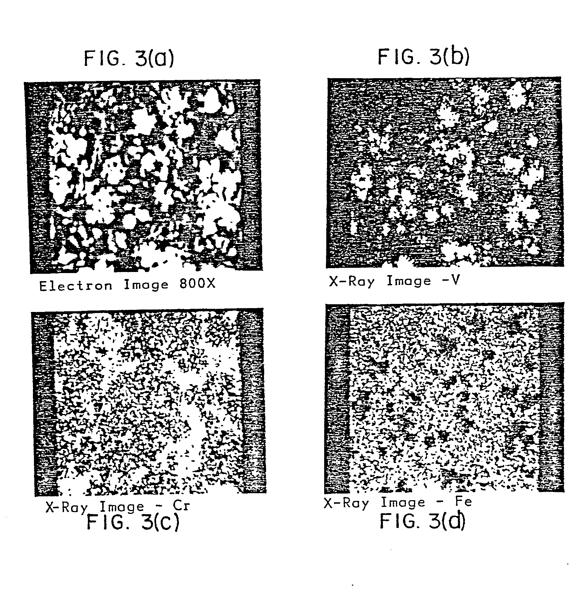

Electron microprobe analysis of hard facing deposits prepared in Example II were also obtained. Figure 3(a) shows the electron image at 800× magnification for the deposit prepared by electric welding using a $75VC_{.9}$ 25 $Cr_3C_2$ hard facing composition. This deposit is Weld Sample F in Table II. Figures 3(b)—(d) show the corresponding X-ray image micrographs for V, Cr and Fe, respectively. It will be readily seen from this analysis that the chromium tends to disperse substantially uniformly throughout the deposit and combines with iron from the base metal to form relatively soft iron carbides in the weld matrix. The vanadium shows little preference to combine with the iron and is present almost exclusively in the form of vanadium carbide.

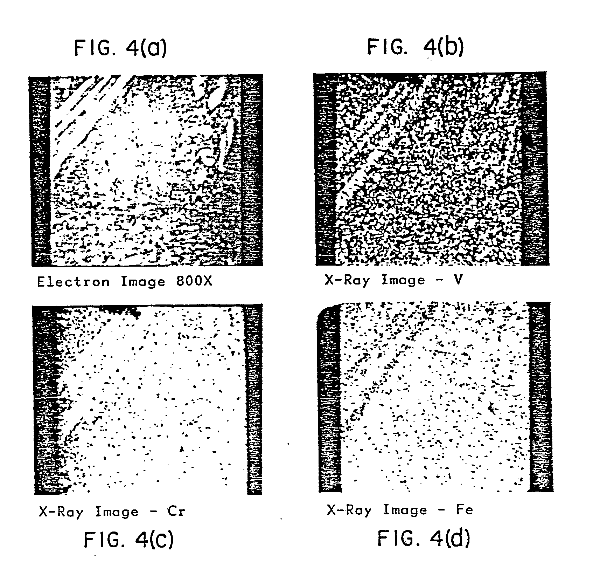

Figure 4(a) shows the electron image at 800× magnification of a weld deposit prepared by electric welding using a hard facing material containing a higher weight proportion of chromium carbide i.e., $25VC_{.9}$ 75 $Cr_3C_2$. This deposit is Weld Sample L in Table II. Figures 4(b)—(d) show the corresponding X-ray image micrographs for V, Cr and Fe, respectively. From this analysis, it can be seen that with a hard facing composition containing predominantly chromium carbide, the vanadium tends to again combine with chromium to form a hard vanadium-chrome carbide in the weld deposit. Both iron and chromium are substantially uniformly dispersed throughout the weld sample as a mixed carbide.

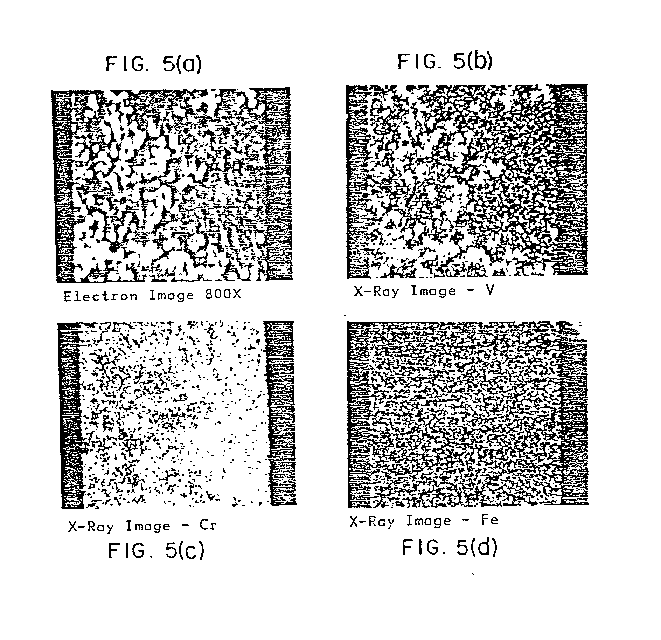

In Figure 5(a), there is shown an electron image taken at 800× magnification of another weld deposit prepared by electric welding using a hard facing material containing equal amounts of both vanadium carbide and chromium carbide ($50VC_{.9}$ 50 $Cr_3C_2$). This deposit is Weld Sample J in Table II. Figures 5(b)—(d) show the corresponding X-ray image micrographs for V, Cr and Fe, respectively. It is of interest to note from this analysis that at approximately equal proportions of vanadium carbide and chromium carbide in the hard facing composition, a transition occurs or begins to occur in the microstructure of the weld deposit. Thus, chromium begins to combine with the vanadium to form a mixed vanadium-chromium carbide as can be readily seen by comparison of the micrographs in Figures 5(b) and 5(c). Again, the iron from the base metal is substantially uniformly dispersed throughout the weld and combines with the chromium to form the mixed carbide.

**Claims**

1. A method for hard facing a surface of an iron base alloy substrate by forming a bond between said surface and a hard facing material containing chromium carbide, characterized by employing as the hard

6

facing material a composition which consists of chemically combined vanadium, chromium and carbon in weight proportions of between 80 to 20% VC and 20 to 80% $Cr_3C_2$ and from 0 to 15% by weight in the aggregate of at least one member of the group of cobalt, iron, nickel and molybdenum.

2. A method in accordance with claim 1 wherein said hard facing composition is in the form of a cold pressed and sintered solid material in particulated form.

3. A method in accordance with claim 1 or 2 wherein said hard facing composition contains chromium carbide in solid solution with vanadium carbide and wherein the bond between said surface and the hard facing material is achieved by electric welding techniques.

4. A hard facing rod comprising a metal sheath containing a hard facing material in the form of finely divided particles containing chromium carbide, characterized in that said particles consist of chemically combined vanadium, chromium and carbon in weight proportions of from 80 to 20% VC and 20 to 80% $Cr_3C_2$ and from 0 to 15% by weight in the aggregate of at least one member of the group of cobalt, iron, nickel and molybdenum.

5. A hard facing rod in accordance with claim 4 wherein said hard facing material contains chromium carbide in solid solution with vanadium carbide.

6. A hard facing rod in accordance with claim 4 or 5 wherein said hard facing composition is in the form of a cold pressed and sintered solid material in particulated form.

### Patentansprüche

1. Verfahren zum Hartauftragschweißen einer Oberfläche eines Substrats aus einer Eisenbasislegierung durch Ausbilden einer Bindung zwischen der Oberfläche und einem Chromkarbid enthaltenden Hartauftragwerkstoff, dadurch gekennzeichnet, daß als Hartauftragwerkstoff eine Zusammensetzung verwendet wird, die aus chemisch kombiniertem Vanadium, Chrom und Kohlenstoff in Gewichtsanteilen von 80 bis 20% VC und 20 bis 80% $Cr_3C_2$ sowie aus insgesamt 0 bis 15 Gew.% mindestens eines Elements der Kobalt, Eisen, Nickel und Molybdän umfassenden Gruppe besteht.

2. Verfahren nach Anspruch 1, bei dem der Hartauftragwerkstoff in Form eines kaltgepreßten, gesinterten, teilchenförmigen Feststoffes vorliegt.

3. Verfahren nach Anspruch 1 oder 2, wobei die Hartauftragzusammensetzung Chromkarbid in fester Lösung mit Vanadiumkarbid enthält und wobei die Bindung zwischen der Oberfläche und dem Hartauftragwerkstoff mittels elektrischer Schweißverfahren erreicht wird.

4. Hartauftragstab mit einem Metallmantel, der einen Hartauftragwerkstoff in Form von chromkarbidhaltigen, fein unterteilten Teilchen enthält, dadurch gekennzeichnet, daß die Teilchen aus chemisch kombiniertem Vanadium, Chrom und Kohlenstoff in Gewichtsanteilen von 80 bis 20% VC und 20 bis 80% $Cr_3C_2$ sowie aus insgesamt 0 bis 15 Gew.% mindestens eines Elements der Kobalt, Eisen, Nickel und Molybdän umfassenden Gruppe bestehen.

5. Hartauftragstab nach Anspruch 4, wobei der Hartauftragwerkstoff Chromkarbid in fester Lösung mit Vanadiumkarbid enthält.

6. Hartauftragstab nach Anspruch 4 oder 5, wobei die Hartauftragzusammensetzung in Form eines kaltgepreßten, gesinterten, teilchenförmigen Feststoffes vorliegt.

### Revendications

1. Procédé pour le surfaçage dur d'une surface d'un substrat en alliage à base de fer, en formant une liaison entre ladite surface et une matière de surfaçage dur contenant du carbure de chrome, caractérisé par l'utilisation, comme matière de surfaçage dur, d'une composition qui comprend, en combinaison chimique, du vanadium, du chrome et du carbone en proportions en poids comprises entre 80 et 20% de VC et 20 à 80% de $Cr_3C_2$, et de 0 à 15% en poids dans l'agrégat d'au moins un élément du groupe du cobalt, du fer, du nickel et du molybdène.

2. Procédé selon la revendication 1, dans lequel ladite composition de surfaçage dur se présente sous la forme d'une matière solide comprimée à froid et frittée, sous forme de particules.

3. Procédé selon la revendication 1 ou 2, dans lequel ladite composition de surfaçage dur contient du carbure de chrome en solution solide avec du carbure de vanadium, et dans lequel la liaison entre ladite surface et la matière de surfaçage dur est obtenue par des techniques de soudage électrique.

4. Baguette de surfaçage dur comprenant une gaine métallique contenant une matière de surfaçage dur sous la forme de particules finement divisées contenant du carbure de chrome, caractérisée en ce que lesdites particules comprennent, en combinaison chimique, du vanadium, du chrome et du carbone en proportions en poids de 80 à 20% de VC et 20 à 80% de $Cr_3C_2$, et de 0 à 15% en poids dans l'agrégat d'au moins un élément du groupe du cobalt, du fer, du nickel et du molybdène.

5. Baguette de surfaçage dur selon la revendication 4, dans laquelle ladite matière dur surfaçage dur comprend du carbure de chrome en solution solide avec du carbure de vanadium.

6. Baguette de surfaçage dur selon la revendication 4 ou 5, dans laquelle ladite composition de surfaçage dur se présente sous la forme d'une matière solide comprimée à froid et frittée, sous forme de particules.

## FIG. I(a)

Electron Image

## FIG. I(b)

X-Ray Image - V

FIG. I(c)

X-Ray Image - Cr

FIG. I(d)

X-Ray Image - Fe

X-Ray Image - Mo     400X

## FIG. I(e)

X-Ray Image - Ni

## FIG. I(f)

1

0 043 103

FIG. 2(a)

FIG. 2(b)

Electron Image

X-Ray Image - V

FIG.2(C)

X-Ray Image - Cr

FIG.2(d)

X-Ray Image - Fe

X-Ray Image - Mo     400X

X-Ray Image - Ni

FIG. 2(e)

FIG. 2(f)

2

FIG. 3(a)

FIG. 3(b)

Electron Image 800X

X-Ray Image -V

X-Ray Image - Cr

FIG. 3(c)

X-Ray Image - Fe

FIG. 3(d)

FIG. 4(a)

FIG. 4(b)

Electron Image 800X

X-Ray Image - V

X-Ray Image - Cr

FIG. 4(c)

X-Ray Image - Fe

FIG. 4(d)

F I G. 5(a)

F I G. 5(b)

Electron Image 800X

X-Ray Image - V

X-Ray Image - Cr

FIG. 5(c)

X-Ray Image - Fe

FIG. 5(d)